(19) Europäisches Patentamt
European Patent Office
Office européen des brevets

(11) **EP 2 400 267 B1**

(12) **FASCICULE DE BREVET EUROPEEN**

(45) Date de publication et mention
de la délivrance du brevet:
**27.03.2019 Bulletin 2019/13**

(51) Int Cl.:
***G01C 21/00*** *(2006.01)*  ***G01C 21/16*** *(2006.01)*

(21) Numéro de dépôt: **11171267.5**

(22) Date de dépôt: **24.06.2011**

(54) **Filtre de navigation pour système de navigation par corrélation de terrain.**

Navigationsfilter für Navigationssystem mit Hilfe von Terrain-Vergleich.

Navigation filter for navigation system by terrain matching.

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.06.2010 FR 1002675**

(43) Date de publication de la demande:
**28.12.2011 Bulletin 2011/52**

(73) Titulaire: **Thales**
**92400 Courbevoie (FR)**

(72) Inventeurs:
• **Louis, Christian**
**91400 ORSAY (FR)**
• **Reynaud, Sébastien**
**75012 PARIS (FR)**

(74) Mandataire: **Collet, Alain**
**Marks & Clerk France**
**Conseils en Propriété Industrielle**
**Immeuble Visium**
**22, Avenue Aristide Briand**
**94117 Arcueil Cedex (FR)**

(56) Documents cités:
**US-A- 4 954 837    US-A- 5 272 639**

• **HEKTOR T ET AL: "A Marginalized Particle Filter
approach to an integrated INS/TAP system",
POSITION, LOCATION AND NAVIGATION
SYMPOSIUM, 2008 IEEE/ION, IEEE,
PISCATAWAY, NJ, USA, 5 mai 2008 (2008-05-05),
pages 766-770, XP031289010, ISBN:
978-1-4244-1536-6**

**EP 2 400 267 B1**

**Description**

La présente invention concerne un filtre de navigation. Elle s'applique notamment au domaine de la navigation de porteurs, et plus particulièrement à des systèmes de navigation opérant notamment suivant des procédés de corrélation de terrain, la navigation par corrélation de terrain étant désignée par le sigle NCT.

La navigation par corrélation de terrain ou NCT, constitue un moyen particulier de navigation, pouvant s'appliquer à une grande diversité de véhicules porteurs, par exemple des aéronefs, des sous-marins, des missiles autoportés, etc.

Il existe trois moyens principaux connus visant à répondre aux besoins de navigation de porteurs. Le premier principal moyen connu comprend les techniques de navigation inertielle. Le deuxième principal moyen connu comprend les techniques de radionavigation. Le troisième principal moyen connu comprend les techniques de navigation par corrélation de terrain.

La navigation inertielle consiste à exploiter des informations fournies par des centrales inertielles. Le fonctionnement d'une centrale inertielle se fonde sur le principe de relativité d'Einstein-Galilée, postulant qu'il est possible, sans l'aide de signaux extérieurs à un porteur, de mesurer d'une part la vitesse de rotation du porteur par rapport à un référentiel inertiel, par exemple défini par un repère géocentrique associé à des étoiles fixes, et d'autre part la force spécifique appliquée au porteur : typiquement son accélération dans le référentiel inertiel, diminuée de l'accélération de la pesanteur. D'une manière typique, un système de navigation inertielle, communément désigné INS selon le sigle correspondant à la terminologie anglaise "Inertial Navigation System", est un dispositif permettant de mesurer ces deux grandeurs au moyen de capteurs tels que des gyromètres et des accéléromètres, communément au nombre de trois de chaque type, disposés selon trois axes orthogonaux, l'ensemble de ces capteurs formant une unité de mesure inertielle, communément désignée "IMU" selon le sigle correspondant à la terminologie anglaise "Inertial Measurement Unit". L'intégration temporelle des données d'accélération, et la projection dans le repère de navigation à partir des données de vitesse de rotation, permettent la détermination de la position et de la vitesse du porteur par rapport à la terre, en connaissance d'un état initial de ces données. Cependant, un inconvénient lié à l'intégration temporelle est que l'erreur associée aux données ainsi déterminées, est une fonction croissante du temps. Cette erreur croît plus que linéairement, typiquement de façon exponentielle, la variation de l'erreur étant communément désignée dérive de la centrale inertielle. Il est ainsi nécessaire, pour des applications nécessitant une navigation de précision, d'hybrider les mesures inertielles avec d'autres mesures de position et/ou de vitesse et/ou d'attitude du porteur fournies par des capteurs complémentaires, tels que des baroaltimètres, des odomètres, des sondes de Pitot, etc., dans le but de diminuer la dérive de la centrale inertielle. De tels capteurs fournissent des informations sur l'état cinématique du porteur sans nécessiter aucun accès à des signaux extérieurs ou des cartes embarquées, et sont communément désignés capteurs de bas niveau.

La radionavigation consiste à exploiter les signaux issus de balises émettrices de signaux radioélectriques, pour en tirer une information de positionnement du porteur vis-à-vis de ces balises. Une technique de radionavigation largement utilisée est la technique de géo-positionnement par satellite, communément désignée selon le sigle GNSS correspondant à la terminologie anglaise "Global Navigation Satellite System", et dont un des représentants est la technique de GPS, correspondant à la terminologie anglaise "Global Positioning System". Un des inconvénients propres aux techniques de radionavigation, est lié au fait que la réception des signaux en provenance des balises n'est pas garantie en tout lieu à tout moment, et peut notamment être affectée par l'environnement géophysique du porteur, ainsi que par le bruit électromagnétique environnant, des techniques de brouillage pouvant notamment mettre en cause le fonctionnement d'un dispositif de radionavigation. En outre, les balises émettrices étant maintenues par des opérateurs, l'intégrité des données de radionavigation qui en sont issues est fortement dépendante de la bonne volonté de ces derniers. La radionavigation, et notamment le géo-positionnement par satellite et la navigation inertielle sont par exemple des techniques de navigation complémentaires, et une hybridation des deux techniques peut s'avérer très performante en pratique. La navigation inertielle constitue en effet un très bon estimateur local de positionnement dérivant à long terme, et le géo-positionnement par satellite étant peu fiable sur une courte durée en raison des inconvénients précités, mais ne présentant pas de dérive. Cependant, dans les applications les plus critiques, et notamment pour les applications militaires, il est essentiel de recourir à d'autres sources d'information de position et/ou de vitesse et/ou d'attitude du porteur pour assurer une hybridation avec une technique de navigation inertielle. Il est notamment souhaitable que ces sources alternatives permettent des mesures de position et/ou de vitesse et/ou d'attitude du porteur qui soient autonomes, non sujettes au brouillage, et discrètes.

La navigation par corrélation de terrain ou NCT consiste à exploiter des mesures de données géophysiques délivrées par un capteur adéquat, à des données de référence propres à un terrain de couverture de la navigation. Les capteurs sont ainsi utilisés conjointement à une carte de référence du terrain, également désignée carte embarquée. Ces capteurs permettent la lecture d'une donnée caractéristique sur le terrain, et la navigation par corrélation de terrain consiste à comparer ces valeurs avec les données de la carte embarquée, la carte embarquée étant un relevé a priori des valeurs de ces données sur la zone de navigation considérée, obtenu par des moyens adéquats, et désigné pour la suite filière de production des données. La navigation par corrélation de terrain est particulièrement adaptée pour une hybridation avec une technique de navigation inertielle, et permet de pallier les insuffisances de la radionavigation. Bien sûr, il est possible, pour des performances optimales, de recourir à un système de navigation permettant une hybridation des trois techniques de navigation précitées.

D'une manière générale, tout système de navigation impliquant une corrélation de terrain comprend ainsi une pluralité de capteurs embarqués compris dans la centrale inertielle, ainsi que le capteur de terrain, une carte embarquée représentant la meilleure connaissance possible sur la réalité des données géophysiques que le capteur embarqué doit mesurer, et un filtre de navigation. Le filtre de navigation permet d'arbitrer en temps réel, entre les informations fournies par la centrale inertielle et celles fournies par la comparaison entre les mesures fournies par le capteur de terrain et la carte embarquée. L'arbitrage réalisé par le filtre en fonction de sa connaissance a priori des erreurs sur les mesures fournies. Cette connaissance est regroupée dans des modèles d'erreur. Les modèles d'erreur sont relatifs à la centrale inertielle, les erreurs de la centrale inertielle étant plus ou moins grandes selon la qualité de l'équipement ; les modèles d'erreur concernent également le capteur de terrain, ainsi que la carte embarquée, les erreurs de cette dernière étant plus ou moins grande selon la qualité de la filière de production des données. Les modèles d'erreur des équipements proviennent des informations fournies par les fabricants, et / ou bien de mesures effectuées via des études spécifiques. Les modèles d'erreur des cartes embarquées sont fournis par les producteurs de données.

Un aspect essentiel de la navigation est le caractère stochastique des phénomènes considérés. En effet, les capteurs produisent des erreurs suivant des modèles stochastiques, et la connaissance des données géophysiques étant peu maîtrisée, la résolution du problème de la navigation par un filtrage rend les performances de navigation intrinsèquement stochastiques. Ainsi, le filtre utilisé dans un système de navigation peut être considéré comme un estimateur d'un processus stochastique, c'est-à-dire comme le dispositif qui donne à tout instant l'état dynamique du porteur modélisé comme une variable aléatoire.

Un premier exemple de système de navigation impliquant une corrélation de terrain est fondé sur la technique de navigation altimétrique. Cette technique consiste à faire naviguer un porteur aérien à l'aide d'une centrale inertielle, d'un capteur de terrain de type radioaltimètre ou scanneur laser multi-faisceau, mesurant la distance du porteur au terrain dans une ou plusieurs direction(s) donnée(s), et d'une carte embarquée de type Modèle Numérique de Terrain ou MNT, recensant les altitudes de points du sol sur une grille régulière géolocalisée.

Un deuxième exemple de système de navigation impliquant une corrélation de terrain est fondé sur la technique de navigation bathymétrique. Cette technique consiste à faire naviguer un porteur marin ou sous-marin à l'aide d'une centrale inertielle, d'un capteur de terrain de type sondeur bathymétrique mono-faisceau ou multi-faisceau, mesurant la distance du porteur au fond de la mer dans une ou plusieurs direction(s) donnée(s), et d'une carte embarquée de type carte bathymétrique, recensant les altitudes de points du fond marin sur une grille régulière géolocalisée.

Un troisième exemple de système de navigation impliquant une corrélation de terrain est fondé sur la technique de navigation gravimétrique. Cette technique consiste à faire naviguer un porteur aérien, marin ou sous-marin à l'aide d'une centrale inertielle, d'un capteur de terrain de type gravimètre ou accéléromètre, mesurant le champ de pesanteur local ou son anomalie, et d'une carte embarquée de type carte d'anomalie gravimétrique, recensant les valeurs de l'anomalie du champ de pesanteur en des points du globe sur une grille régulière normalisée.

Un quatrième exemple de système de navigation impliquant une corrélation de terrain est fondé sur la technique de navigation par vision. Cette technique consiste à faire naviguer un porteur aérien à l'aide d'une centrale inertielle, d'un capteur de terrain de type caméra embarquée qui délivre des images du paysage survolé à une fréquence donnée dans le domaine visible ou infrarouge, et de deux cartes embarquées, une carte embarquée de type Orthoimage géolocalisée, c'est-à-dire une image ré-échantillonnée de telle sorte qu'ont été supprimés les effets du relief, c'est-à-dire pour laquelle l'échelle est la même en tous les points, ainsi qu'une carte embarquée de type MNT.

Dans le cadre de systèmes de navigation impliquant une corrélation de terrain, les concepteurs sont notamment confrontés à un certain nombre de problèmes techniques énoncés ci-dessous :

- il est nécessaire de définir un système de navigation permettant d'atteindre une qualité souhaitée de navigation selon un ensemble de critères de performance déterminés, par exemple garantissant une erreur moyenne de positionnement inférieure à un seuil donné, ceci à moindre coût ;
- il est nécessaire de déterminer des modèles d'erreur les plus fidèles possible pour la centrale inertielle, le capteur de terrain et la carte embarquée ;
- il est nécessaire de définir les missions d'un porteur, notamment en terme de trajectoire de consigne, lors d'une phase de préparation de mission, afin de déterminer une trajectoire optimale le long de laquelle la qualité du signal délivré par le capteur de terrain soit maximale, la trajectoire optimale devant également être définie en fonction d'autres critères de performance de la mission du porteur et de contraintes opérationnelles liées au théâtre de la mission. La phase de préparation de mission doit par exemple se fonder sur un critère de navigabilité qui soit pertinent, c'est-à-dire représentatif de la richesse du signal délivré par le capteur de terrain ;
- il est nécessaire de définir un filtre de navigation performant, robuste et capable de prendre en considération au mieux tous les modèles d'erreur relatifs aux différents composants du système, c'est-à-dire l'erreur de la centrale inertielle, du capteur de terrain et de la carte embarquée.

La présente invention a principalement pour objet de résoudre le problème technique précité, relatif à la définition d'un filtre de navigation performant. Selon des techniques connues de l'état de la technique, les filtres de navigation employés dans des systèmes de NCT sont des filtres de navigation de type filtre de Kalman étendu, communément désigné par le sigle EKF correspondant à la terminologie anglaise "Extended Kalman Filter". Ces filtres sont notoirement peu robustes en cas d'une faible information remontant du terrain, présentant des cas pouvant entraîner une divergence du filtre. Des solutions connues permettant d'éviter ces divergences, consistent à coupler des filtres EKF avec des algorithmes de recalage par bloc. Cependant, d'une manière typique, des phases de recalage par blocs peuvent durer de l'ordre d'une vingtaine de secondes à une minute, laps de temps pendant lequel aucune information sur le comportement du système n'est remontée. De tels effets de "silence" peuvent avoir un impact fâcheux sur la navigation d'un porteur, qui peut parcourir ainsi jusqu'à 15 km, pour une vitesse de déplacement égale à 250 m/s, sans aucun moyen d'apprécier la qualité de sa navigation.

Des filtres non linéaires plus génériques que les filtres de Kalman sont connus de l'état de la technique. Il s'agit des filtres particulaires, qui pallient les défauts des filtres EKF. Néanmoins, les filtres particulaires présentent des effets de dégénérescence au bout d'un temps relativement long de navigation. De ce fait, les filtres particulaires n'ont jusqu'ici jamais été exploités en pratique dans des applications de navigation par corrélation de terrain.

Un but de la présente invention est de pallier au moins les inconvénients précités, en proposant un filtre de navigation offrant de bonnes caractéristiques de robustesse, de bonnes performances de convergence, et ne présentant pas l'inconvénient liés aux effets de silence précités.

A cet effet, la présente invention a pour objet un filtre de navigation pour système de navigation par corrélation de terrain délivrant une estimation de l'état cinématique d'un porteur associé à une matrice de covariance à un instant discrétisé k à partir d'une pluralité de données comprenant les mesures restituées par au moins un capteur de terrain, le modèle associé au capteur de terrain, les données d'une carte embarquée, un modèle d'erreur de la carte embarquée, les mesures restituées par une centrale inertielle et un modèle de la centrale inertielle, le filtre de navigation comprenant un premier filtre dit filtre de convergence et un second filtre dit filtre de poursuite, le filtre de navigation comprenant des moyens de basculement sélectionnant pour le calcul de l'état cinématique du porteur et de la matrice de covariance, l'un ou l'autre desdits filtres de convergence et filtre de poursuite, en fonction de la comparaison d'un indice de qualité calculé à partir de la matrice de covariance restituée par le filtre de navigation à l'instant précédent k-1, à une valeur seuil prédéterminée, le filtre de navigation restituant les valeurs calculées par le filtre sélectionné, caractérisé en ce que le filtre de convergence est un filtre de type particulaire.

Dans un mode de réalisation de l'invention, l'indice de qualité peut être égal à une norme des termes d'une sous-matrice de la matrice de covariance.

Dans un mode de réalisation de l'invention, l'indice de qualité peut être égal à une norme des termes de la sous-matrice de covariance comprenant les termes de position du porteur dans un plan horizontal.

Dans un mode de réalisation de l'invention, l'indice de qualité peut être égal à la somme des carrés des termes diagonaux de la sous-matrice de covariance comprenant les termes de position du porteur dans un plan horizontal.

Dans un mode de réalisation de l'invention, le filtre de convergence peut être un filtre de type particulaire marginalisé.

Dans un mode de réalisation de l'invention, le filtre de poursuite peut être un filtre de type filtre de Kalman étendu désigné suivant l'acronyme EKF.

Dans un mode de réalisation de l'invention, le filtre de poursuite peut être un filtre du type désigné suivant l'acronyme UKF.

Dans un mode de réalisation de l'invention, le filtre de poursuite peut être associé à un dispositif de rejet de mesures aberrantes, rejetant les mesures si le rapport entre l'innovation et l'écart type du bruit de mesure dépasse une deuxième valeur de seuil prédéterminée.

Dans un mode de réalisation de l'invention, les moyens de basculement restituent en sortie du filtre de navigation les données restituées par ledit filtre de convergence lorsque le nombre de mesures consécutives rejetées par le dispositif de rejet est supérieur à une troisième valeur de seuil prédéterminée.

Dans un mode de réalisation de l'invention, le filtre de navigation peut en outre comprendre des moyens de comparaison de l'écart type local des mesures de navigation par corrélation de terrain à une quatrième valeur de seuil prédéterminée, le filtre de navigation se basant uniquement sur les mesures fournies par le baro-altimètre compris dans la centrale inertielle lorsque l'écart type est inférieur à ladite quatrième valeur de seuil prédéterminée.

D'autres caractéristiques et avantages de l'invention apparaîtront à la lecture de la description, donnée à titre d'exemple, faite en regard des dessins annexés qui représentent :

-   la figure 1, un schéma illustrant de manière synoptique la structure d'un système de navigation impliquant une corrélation de terrain ;

- la figure 2, un schéma illustrant de manière synoptique la structure d'un filtre de navigation selon un exemple de réalisation de l'invention ;
- la figure 3, un logigramme illustrant le fonctionnement d'un filtre de navigation selon un exemple de réalisation de l'invention.

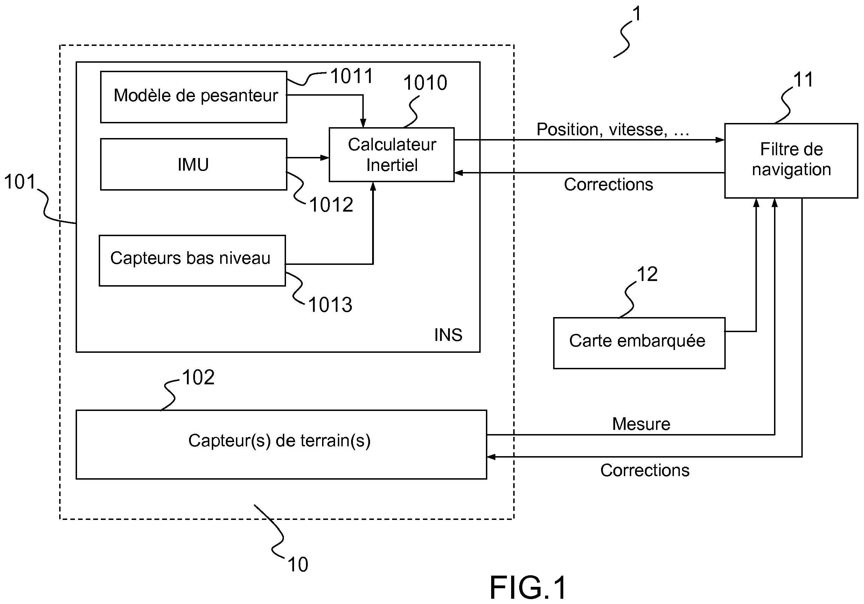

La figure 1 présente un schéma illustrant de manière synoptique la structure d'un système de navigation impliquant une corrélation de terrain.

Un système de navigation 1 comprend un bloc de navigation 10, un filtre de navigation 11 et une carte embarquée 12.

Le bloc de navigation 10 peut comprendre une centrale inertielle 101 et un ou une pluralité de capteurs de terrain 102. La centrale inertielle 101 peut notamment comprendre un calculateur inertiel 1010, recevant des données en provenance d'un modèle de pesanteur 1011, d'une IMU 1012 et d'un ou une pluralité de capteurs de bas niveau 1013.

Le filtre de navigation 11 reçoit des données de position, de vitesse et d'attitude du porteur, en provenance du calculateur inertiel 1010. Le filtre de navigation 11 reçoit des mesures de données géophysiques en provenance des capteurs de terrain 102. Egalement, le filtre de navigation 11 accède aux données contenues dans la carte embarquée 12. Le filtre de navigation 11 peut être mis en oeuvre dans des dispositifs de calcul adéquats, et restitue des estimations de l'état cinématique du porteur. Le filtre de navigation 11 est également apte à appliquer des corrections aux paramètres de configuration du calculateur inertiel 1010 et des capteurs de terrain 102 et de la carte embarquée 12. D'une manière typique, le filtre de navigation 11 peut par exemple corriger des biais des capteurs de terrain 102, ou encore des dérives de la centrale inertielle 101 ou bien des paramètres du modèle d'erreur de la carte embarquée 12.

La carte embarquée 12 peut par exemple être formée par un ensemble de différentes cartes de différentes natures correspondant à chacun des capteurs de terrain impliqués, données stockées dans une mémoire.

La solution proposée par la présente invention est basée sur la collaboration d'un premier filtre appelé par la suite « filtre de convergence », de type particulaire, offrant de meilleures performances dans les phases de convergence ou de divergence, associé à un second filtre appelé par la suite « filtre de poursuite », par exemple issu de la famille des filtres de Kalman offrant de bonnes performances dans les phases de poursuite d'un porteur, c'est-à-dire dans les phases où l'erreur de positionnement est assez faible,.

Ainsi que cela est décrit précédemment, il est possible, selon des méthodes en elles-mêmes connues de l'état de la technique, de recourir à un algorithme de corrélation par blocs lorsque le modèle de mesure « verticale » est licite. Selon un tel algorithme, un profil de mesure est stocké puis comparé avec le terrain dans la zone d'incertitude jusqu'à obtenir une corrélation satisfaisante. Lorsque l'incertitude sur les paramètres est suffisamment faible, il est alors possible de recourir à un filtre de type EKF, qui prend le relais de l'algorithme de corrélation par blocs. Cependant de telles méthodes présentent l'inconvénient de générer des effets de silence dans certaines situations.

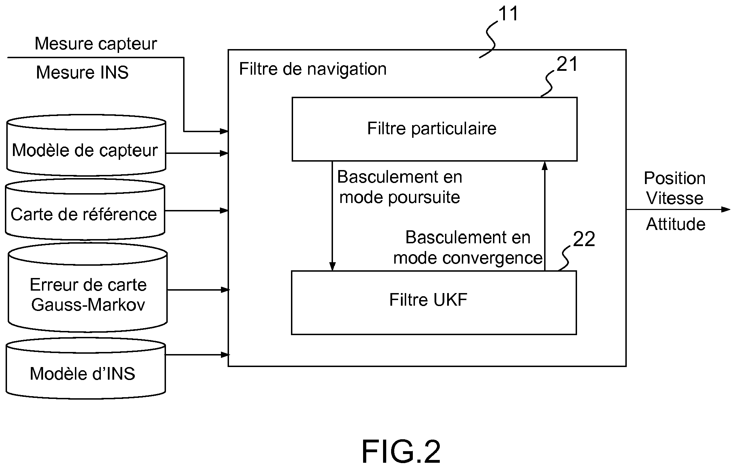

Un filtre de navigation selon la présente invention peut être illustré par le schéma en synoptique présenté par la figure 2. En référence à la figure 2, un filtre de navigation 11 fournissant en sortie une estimation de l'état cinématique d'un porteur, par exemple une estimation de la position, de la vitesse et de l'attitude de ce dernier, reçoit en entrée une pluralité de données, comprenant les mesures réalisées par le capteur de terrain, les mesures restituées par la centrale inertielle, le modèle de capteur de terrain, les données de la carte embarquée, le modèle d'erreur de carte, par exemple de type Gauss-Markov, le modèle de la centrale inertielle. Le filtre de navigation 11 peut comprendre un premier filtre désigné filtre de convergence 21, de type filtre particulaire, et un second filtre désigné filtre de poursuite 22, par exemple de type filtre de Kalman. Plus précisément, le filtre de poursuite 22 peut être du type désigné EKF ou UKF respectivement selon les terminologies anglaises « Extended Kalman Filter » et "Unscented Kalman Filter".

La navigation optimale peut être considérée comme un problème de filtrage non linéaire. Le système dynamique de filtrage, discrétisé dans le domaine temporel, peut être formalisé par la relation suivante :

$$\begin{cases} X_k = f_k(X_{k-1}) + W_k \\ Y_k = h_k(X_k) + V_k \end{cases} \qquad (1),$$

où :

$X_k$ désigne l'état, d'une dimension d, du système dynamique à une étape temporelle k ; $f_k(X_{k-1})$ désigne le modèle de transition d'état appliqué à l'état dynamique du système à l'étape temporelle précédente k-1 ; $W_k$ désigne le bruit de process, considéré comme issu d'une distribution normale de moyenne nulle et de covariance

$$Q_k : W_k \approx N(0, Q_k) \ ;$$

Mathématiquement, la mesure de la position de la plate-forme par un capteur géophysique se représente par la seconde équation du système d'équations formulé dans la relation (1) ci-dessus, dans laquelle h est une fonction a priori non linéaire de la position et $w_k$ est une erreur de mesure généralisée dépendant à la fois :

• de l'erreur de mesure du capteur proprement dit,

• de l'incertitude associée à la cartographie de la donnée géophysique ;

$Y_k$ désigne l'observation de l'état dynamique du système à l'étape temporelle k ; $h_k$ désigne le modèle d'observation ; $V_k$ désigne le bruit d'observation, issu d'une distribution de type bruit blanc Gaussien, de moyenne nulle et de

covariance $\quad R_k : V_k \approx N(0, R_k).\quad$ Le bruit de process $W_k$ et le bruit d'observation $V_k$ sont supposés indépendants.

L'hybridation de cette mesure et de l'équation d'évolution, la première équation du système d'équations posé par la relation (1) ci-dessus, revient mathématiquement à un problème de filtrage non linéaire. Le problème posé est alors d'estimer à tout instant t la distribution de probabilité conditionnelle de l'état connaissant l'ensemble des mesures.
$X_k$ désignant l'état de la plate-forme, le filtrage optimal du processus aléatoire rassemblant l'ensemble des variables aléatoires, {Xk}, à partir de la suite des variables aléatoires, {$y_k$}, revient à calculer la probabilité conditionnelle exprimée suivant la relation suivante :

$$p\big(X(k)\big|y(t), t \le t_k\big) \qquad\qquad (2).$$

Le modèle précédent entraîne que le signal k → [$X(k)$, $y(t_k)$] est un processus markovien, ce qui permet un calcul récursif de cette probabilité conditionnelle. Le résultat de ce calcul est appelé filtre bayésien optimal.
Le principe de ce filtrage optimal est détaillé ci-après. Le problème consiste à calculer la distribution de probabilité conditionnelle exprimée suivant la relation suivante :

$$\mu_k(dx) = P\big(X(k) \in dx \big| Y(j), j \le k\big) \qquad\qquad (3),$$

où dx désigne la mesure de Borel, et où, dans un souci de simplification des écritures, il est posé $Y(j) = y(t_j)$.
En supposant, dans un souci de simplification, que les bruits d'observation sont indépendants, les observations $Y_{0:k}$ sont conditionnellement indépendantes sachant les états cachés $X_{0:k}$.
La loi jointe des observations conditionnellement aux états cachés peut se factoriser suivant la relation suivante :

$$P\big[Y_{0:k} \in dy_{0:k}\big|X_{0:k} = x_{0:k}\big] = \prod_{j=0}^{k} g_j\big(x_j, y_j\big)dy_j \qquad\qquad (4),$$

où $dy_{0:k}$ désigne la mesure de Borel sur $R^k$ = RxRxR...xR k fois, avec les probabilités conditionnelles :

$$P\big[Y_k \in dy_k\big|X_k = x_k\big] = g_k\big(x_k, y_k\big).$$

La loi jointe des états cachés et des observations peut alors s'écrire suivant la relation suivante :

$$P\big[X_{0:n} \in dx_{0:k}, Y_{0:k} \in dy_{0:k}\big] = P\big[X_{0:k} \in dx_{0:k}\big]\prod_{j=0}^{k} g_j\big(x_j, y_j\big)dy_j \qquad\qquad (5).$$

Il peut être déduit de la relation (5) ci-dessus, en posant $g_k(x) = g_k(x, Y_k)$, la relation suivante :

$$\int \Phi(x)\mu_k(dx) = E\big[\Phi(X_k)\big|Y_{0:k}\big] = \frac{E\left[\Phi(X_k)\prod_{j=0}^{k} g_j(X_j)\right]}{E\left[\prod_{j=0}^{k} g_j(X_j)\right]} \qquad (6).$$

La transition de $\mu_{k-1}$ à $\mu_k$ implique deux étapes, une étape de prédiction et une étape de correction :

$$\mu_{k-1} \xrightarrow{\textit{prédiction}} \mu_{k|k-1} = \mu_{k-1}Q_k \xrightarrow{\textit{correction}} \mu_k = g_k\mu_{k|k-1}$$

Dans l'étape de prédiction, l'estimation sur l'état $X_{k-1}$ fournie par $\mu_{k-1}$ est combinée avec le modèle. Ainsi que cela est décrit précédemment, l'état $X_k$ est un processus markovien. $Q_k$ son noyau de transition entre les états aux instants k-1 et k est noté $Q_k$.

Dans l'étape de correction, cette estimation a priori sur l'état $X_k$ est combinée avec l'information apportée par la nouvelle observation $Y_k$ (quantifiée par la fonction de vraisemblance $g_k$), et à l'aide de la formule de Bayes une estimation a posteriori sur l'état $X_k$ peut être obtenue.

En pratique, un tel calcul, c'est-à-dire un tel filtre, ne peut pas être mis en oeuvre puisque, sauf dans certains cas particuliers, il n'existe pas de résumé exhaustif fini-dimensionnel de la distribution conditionnelle autorisant une mise en oeuvre exacte par calcul, par exemple via un programme d'ordinateur. Les équations exprimées dans les relations (3) à (6) ci-dessus n'ont pas de solution exacte explicite, sauf dans le cas particulier des systèmes linéaires gaussiens. Ce cas particulier correspond au filtre de Kalman, qui suppose que les équations de dynamique de l'état et de sa mesure sont linéaires et que toutes les erreurs sont gaussiennes. Dans ce cas, la distribution conditionnelle est elle-même gaussienne. Elle est caractérisée par l'espérance conditionnelle et la matrice de covariance conditionnelle, dont les calculs peuvent aisément être mis en oeuvre dans des programmes d'ordinateur.

Dans tous les autres cas, seule une approximation de ce filtre est envisageable. Il existe différentes grandes familles de méthodes d'approximation du filtre bayésien optimal en elles-mêmes connues de l'état de la technique.

Une première famille comprend les mises en oeuvre discrètes du filtre, et comprend les grilles, les approches dites topologiques et les filtres particulaires.

Une seconde famille comprend les filtres de Kalman, les filtres de type EKF ou UKF, et les filtre de type EKF dits à hypothèses multiples.

Ces différentes méthodes présentent chacune des avantages et des inconvénients, et peuvent être optimales mais coûteuses en temps de calcul ; c'est le cas par exemple du filtrage particulaire ou bien par grille, ou bien optimales et rapides mais soumises à des hypothèses restrictives : c'est le cas par exemple des filtres de Kalman, ou encore rapides et robustes mais imprécises : c'est le cas par exemple des approches topologiques.

On peut néanmoins classer les filtres dans les deux catégories de filtres de poursuite, adaptés aux phases où les incertitudes sur la position sont faibles, ou filtres de convergence, adaptés aux phases de grande incertitude.

Pour chacune de ces deux catégories de filtres, il est possible de sélectionner :

• les filtres de la famille Kalman pour la phase de poursuite,
• les filtres de type particulaire pour la phase de convergence.

Quelques approximations du filtrage non linéaire sur la base de filtres de la famille Kalman et de la famille des filtres particulaires sont décrites ci-après.

Pour la suite, il est considéré le filtrage d'un processus X satisfaisant au modèle d'évolution d'état décrit par la relation suivante :

$$X_{k+1} = f(k, X_k) + v_k \qquad (7),$$

où

$v_k$ est un bruit blanc. Un processus d'observation $Y_k$ est relié à $X_k$ par la relation suivante :

$$Y_k = h(k, X_k) + w_k \qquad (8),$$

où

$w_k$ est un bruit blanc, pouvant être modélisé comme indépendant de $v_k$ comme dans les hypothèses du système formulé par la relation (1) précédemment.

Lorsque les fonctions x→f(k,x) et x→h(k,x) sont linéaires en x, et lorsque les bruits d'état et d'observation sont des bruits gaussiens, la distribution de probabilité conditionnelle $\mu_k$(dx) est gaussienne, et ses deux premiers moments sont donnés par des équations récursives qui sont les équations du filtre de Kalman. L'avantage majeur offert par le filtre de Kalman est que la performance du filtre peut être calculée hors ligne en résolvant une équation de type Ricatti.

Dans le cas non linéaire général, il est nécessaire d'approximer les équations permettant de gérer les étapes de prédiction et de correction du filtre. Il est à observer que, quelle que soit l'approximation choisie, la performance de la méthode de filtrage ne pourra d'une manière générale être appréciée que par simulation Monte Carlo.

L'approche la plus élémentaire, basée sur des filtres de type EKF, repose sur la linéarisation récursive, par approximation de Taylor, des fonctions x→f(k,x) et x→h(k,x) autour de l'estimée de l'état, qui peut alors être propagé par un filtre de Kalman, comme dans le cas linéaire.

Il est possible de remplacer l'approximation de Taylor par une approximation stochastique, ou approximation d'Hermite, qui conduit au filtre de type UKF. Dans un tel filtre, des points, dénommés sigma-points sont utilisés, et les sigma-points sont associés à des poids, issus de formules de quadrature numérique, pour représenter les distributions de probabilité conditionnelle en évitant toute linéarisation.

Il est également possible d'approximer la loi conditionnelle $\mu_k$(dx) par un mélange de gaussiennes, suivant la relation suivante :

$$\mu_k(dx) \approx \sum_{n=1}^{n=N} p_k^n Gauss_k^n(dx) \qquad (9),$$

où

Gauss désigne une loi Normale de moyenne $M_k^n$ et de covariance $S_k^n$. Cette approximation conduit à une combinaison de N filtres de Kalman.

Les avantages procurés par ces techniques de la famille Kalman sont liés à leur simplicité de mise en oeuvre, au faible coût en terme de temps de calcul, et aux bonnes performances dans les phases de poursuite. Les inconvénients sont liés à la mauvaise prise en compte de la multi-modalité ou d'autres formes d'ambiguïté, même temporaires, liées souvent à de grandes incertitudes, et à la difficulté intrinsèque à linéariser une fonction d'observation définie seulement ponctuellement, par lecture sur une carte numérique.

Le filtrage particulaire, décrit ci-après, vise à apporter une solution à certains de ces inconvénients en approximant les calculs bayésiens d'intégrales des étapes de prédiction et de correction par des méthodes de Monte Carlo. Il est à observer que l'approximation des intégrales bayésiennes peut conduire à différentes mises en oeuvre.

L'approche de type filtrage particulaire consiste à approcher numériquement le filtre bayésien, c'est-à-dire la distribution de probabilité conditionnelle $\mu$k(dx) à l'aide de particules, qui sont autant d'hypothèses pour représenter l'état caché X, éventuellement affectées de poids exprimant la pertinence de chaque particule pour représenter l'état caché. Une approximation peut alors se formuler suivant la relation suivante :

$$P\left[X_k \in dx \middle| Y_{0:k}\right] \approx \sum_{i=1}^{N} w_k^i \delta_{\xi_k^i} \qquad (10),$$

où

les particules $\xi_k^i$ forment une grille aléatoire qui suit les évolutions de la suite des états cachés, et se concentre sur les zones d'intérêt, au niveau desquelles la vraisemblance est forte.

Dans l'étape de prédiction, on utilise donc le modèle d'évolution des erreurs d'estimation inertielle, des biais inertiels et des éventuels hyper-paramètres, pour permettre aux particules d'explorer l'espace d'état et de former des hypothèses pertinentes.

Dans l'étape de correction, on évalue la vraisemblance de chaque particule, qui permet de quantifier la pertinence de chacune de ces hypothèses réalisées pour l'état caché avec les observations mesurées par le capteur de terrain et avec les estimations de position délivrées par la centrale, et on met ainsi à jour le poids de chaque particule. A chaque itération, ou bien seulement lorsqu'un critère permettant de quantifier le déséquilibre dans la répartition des poids des particules dépasse un seuil déterminé, les particules sont redistribuées en fonction de leurs poids respectifs, avec pour effet de multiplier les particules les plus prometteuses, ou au contraire d'éliminer les particules les moins prometteuses.

Ce mécanisme de mutation / sélection a pour effet de concentrer automatiquement les particules, c'est-à-dire la puissance de calcul disponible, dans les régions d'intérêt de l'espace d'état.

Une variante communément utilisée pour les filtres particulaires consiste à exploiter la nature conditionnellement linéaire gaussienne du problème pour propager un système de particules dans un espace d'état de dimension réduit : cette méthode est dite de Rao-Blackwell ou de marginalisation. Il est possible d'employer cette méthode pour des applications du filtrage particulaire à la navigation inertielle.

Dans le cadre de la navigation inertielle, l'équation d'état est usuellement linéaire avec des bruits gaussiens, et l'équation d'observation est non linéaire avec des bruits qui ne sont pas nécessairement gaussiens, mais ne mettent en jeu que certaines composantes de l'état : essentiellement les erreurs d'estimation inertielle en position, ces composantes sont par exemple désignées par le terme d'états « non linéaires » XNL et les autres composantes de l'état par le terme « d'états linéaires » XL.

Il est à remarquer en premier lieu que la loi conditionnelle de XL sachant les observations passées et sachant les états non linéaires passés XNL ne dépend en fait que des états non linéaires passés, et que cette loi est gaussienne, donnée par un filtre de Kalman dont les observations sont les états non linéaires. Il est à remarquer ensuite que la loi jointe des états non linéaires peut s'exprimer à l'aide d'innovations.

La méthode de Rao-Blackwell tire avantage de ces remarques et approche la loi conditionnelle jointe des états linéaires et des états non linéaires passés sachant les observations passées à l'aide d'une approximation particulaire, sur un espace d'état de dimension réduite, de la loi conditionnelle des états XNL passés sachant les observations passées, et associe à chaque particule, qui représente donc une trajectoire possible des états « non linéaires », un filtre de Kalman pour prendre en compte la loi conditionnelle de XL sachant les états XNL passés.

Par rapport à une approximation particulaire classique, la méthode de Rao-Blackwell réduit la variance de l'erreur d'approximation et n'utilise l'approximation particulaire que sur un espace d'état de dimension réduite, ce qui augmente d'autant l'efficacité de l'algorithme en minimisant son coût calculatoire.

Les principaux avantages de l'approche particulaire résident dans la prise en compte immédiate des non linéarités, des contraintes portant sur l'état caché ou sur son évolution, des statistiques de bruit non gaussiennes, etc., et dans leur grande facilité de mise en oeuvre : il suffit en effet de savoir simuler des réalisations indépendantes du modèle d'état caché, et de savoir calculer la fonction de vraisemblance en un point quelconque de l'espace d'état, cette dernière restriction pouvant d'ailleurs être levée. De plus les grandes incertitudes sur l'état produisent des multi-modalités qui sont naturellement prises en compte par ce type d'approximation, ce qui est caractéristique de la phase de convergence.

Les principaux inconvénients de cette approche résident essentiellement dans un temps de calcul plus important, mais qui se réduit essentiellement à la répétition, sur un échantillon de grande dimension de l'ordre de quelques centaines à quelques milliers, de tâches par ailleurs très simples de complexité comparable voire inférieure à la complexité d'un filtre de Kalman étendu, ainsi que dans l'introduction d'aléa supplémentaires pour la simulation (lors de l'étape de prédiction) et pour la redistribution. Il est donc indiqué de réduire à tout instant au minimum le nombre de particules et l'aléa supplémentaire introduit.

La présente invention propose de combiner astucieusement les deux familles de filtres, Kalman et particulaire, en sélectionnant le meilleur algorithme dans chacune des phases de convergence et de poursuite.

Pour une meilleure compréhension de l'invention, l'algorithme de poursuite de type UKF est développé ci-après, et choisi à titre d'exemple non limitatif de l'invention.

Le filtrage de type UKF permet de s'affranchir de la linéarisation des fonctions f et h, en obtenant directement à partir de f et h des approximations numériques de la moyenne et de la covariance de l'état dynamique du système. A cette fin, un ensemble de points désignés "sigma-points" ou $\sigma$-points est élaboré. Les fonctions f et h sont évaluées pour les $\sigma$-points. Le nombre de $\sigma$-points créés dépend de la dimension d du vecteur d'état dynamique. Les $\sigma$-points sont alors propagés dans le modèle de prédiction non linéarisé. La moyenne et la covariance sont alors calculées par moyenne pondérée à partir des $\sigma$-points, chaque $\sigma$-point $X_i$ étant associé à un poids $\omega_i$.

La construction des $\sigma$-points proposée par Rudolph van der Merwe peut par exemple être utilisée. Selon cette construction, les $\sigma$-points $x_{-d},...,x_d$ peuvent être formulés suivant la relation suivante :

$$\begin{cases} x_0 = \bar{x} \\ x_{\pm i} = \bar{x} \pm S_{x \cdot e_i} \cdot \sqrt{d + \lambda} \end{cases} \qquad (11),$$

où :

$S_x$ désigne la racine carrée de la matrice de covariance, $P_x$, obtenue par décomposition de Cholesky, et $e_i$ est le i-ème vecteur de base.

Les poids associés $\omega_{-d}^{(m)},\ldots,\omega_d^{(m)}$ pour l'estimation de la moyenne et $\omega_{-d}^{(c)},\ldots,\omega_d^{(c)}$ pour l'estimation de la variance sont donnés par la relation suivante :

$$\begin{cases} \omega_0^{(m)} = \dfrac{\lambda}{d + \lambda} \\[2ex] \omega_0^{(c)} = \dfrac{\lambda}{d + \lambda} + \left(1 - \alpha^2 + \beta\right) \\[2ex] \omega_i^{(m)} = \omega_i^{(c)} = \dfrac{1}{2(d + \lambda)}, i \neq 0 \end{cases} \tag{12},$$

où :
$\lambda$ est un coefficient d'échelle défini par: $\lambda = \alpha^2(d+\kappa)-d$, $\alpha, \beta, \kappa$ étant des paramètres à ajuster.

En utilisant le paramétrage admissible $\alpha = 1$, $\beta = 0$ qui rend identiques les poids pour le calcul de la moyenne et de la covariance, il est alors possible de fixer $\lambda = \kappa$. On considère alors les poids :

$$\omega_0 = \frac{\lambda}{d + \lambda} \text{ et } \omega_{-i} = \omega_i = \frac{1}{2(d + \lambda)} \tag{13}.$$

Ainsi, pour l'étape de prédiction, propre à tout système de filtrage, les $\sigma$-points $x_{-d},\ldots,x_d$ peuvent être définis par la relation :

$$x_0 = \hat{X}_{k-1} \text{ et } x_{\pm i} = \hat{X}_{k-1} \pm S_{k-1} \cdot e_i \cdot \sqrt{d + \lambda} \tag{14},$$

où :
$\hat{X}_{k-1}$ désigne l'estimation a posteriori de l'état dynamique à l'instant k-1 ; $S_{k-1}$ est la racine carrée de la matrice de covariance de l'état à l'instant k-1, $P_{k-1}$, obtenue par décomposition de Cholesky et $e_i$ est le i-ème vecteur de base.
Le vecteur moyen d'état dynamique à l'instant k peut être formulé par la relation suivante :

$$\overline{\hat{X}}_k = \sum_{i=-d}^{d} \omega_i f_k(x_i) \tag{15}.$$

La matrice de covariance moyenne à l'instant k peut être formulée par la relation suivante :

$$\overline{P}_k = Q_k + \sum_{i=-d}^{d} \omega_i \left( f_k(x_i) - \overline{\hat{X}}_k \right) \cdot \left( f_k(x_i) - \overline{\hat{X}}_k \right)^T \tag{16}.$$

Pour l'étape de correction, il est possible de définir les $\sigma$-points $x_{-d},\ldots,x_d$ par la relation :

$$\begin{cases} x_0 = \overline{\hat{X}}_k \\[2ex] x_{\pm i} = \overline{\hat{X}}_k \pm \overline{S}_k \cdot e_i \cdot \sqrt{d + \lambda} \end{cases} \tag{17},$$

où :

$\overline{s}_k$ est la racine carrée de la matrice de covariance moyenne, $\overline{P}_k$, obtenue par décomposition de Cholesky et $e_i$ est le i-ème vecteur de base.

La prédiction du vecteur moyen de mesure peut être formulée par la relation :

$$\overline{\hat{Y}}_k = \sum_{i=-d}^{d} \omega_i h_k(x_i) \tag{18}.$$

La prédiction de la matrice de covariance moyenne $\Xi_k$ à l'instant k peut être formulée par la relation suivante :

$$\Xi_k = R_k + \sum_{i=-d}^{d} \omega_i \left( h_k(x_i) - \hat{Y}_k^- \right) \cdot \left( h_k(x_i) - \hat{Y}_k^- \right)^T \tag{19}.$$

La matrice de corrélation peut être formulée par la relation suivante :

$$C_k = \sum_{i=-d}^{d} \omega_i \left( x_i - \hat{X}_k^- \right) \cdot \left( h_k(x_i) - \hat{Y}_k^- \right)^T \tag{20}.$$

L'estimation de l'état dynamique du système à l'instant k ainsi que la covariance associée peuvent alors être formulées par la relation suivante :

$$\begin{cases} \hat{X}_k = \overline{\hat{X}}_k + C_k \cdot \Xi_k^{-1} \left( Y_k - \overline{\hat{Y}}_k \right) \\ P_k = \overline{P}_k - C_k \cdot \Xi_k^{-1} C_k^T \end{cases} \tag{21}.$$

L'algorithme peut être initialisé avec :

$$\hat{X}_0 = E\left[ X_0 \right] \text{ et } P_0 = E\left[ \left( X_0 - \hat{X}_0 \right) \cdot \left( X_0 - \hat{X}_0 \right)^T \right] \tag{22}.$$

Le paramètre d'échelle $\lambda$, représentatif de la dispersion des σ-points autour de la valeur moyenne, peut par exemple être fixé à 0,9.

Lorsque les incertitudes sont plus importantes, par exemple dans le cas où les performances de la centrale inertielle sont insuffisantes ou lorsque les informations remontant du terrain ne sont pas assez discriminantes, le filtre de poursuite 22 peut ne plus être en mesure de traiter correctement le problème de filtrage, car la distribution conditionnelle de l'état sachant la mesure peut alors devenir multi modale.

Il s'agit alors d'utiliser un filtre de convergence plus apte à ramener les fortes incertitudes à des valeurs plus faibles. Une telle fonction de filtre de convergence est particulièrement bien traitée par les filtres de type particulaire.

La suite de la description décrit en détails la technique de Rao-Blackwellisation, ou de marginalisation, à titre d'exemple non limitatif de l'invention, cette technique permettant d'optimiser le filtre particulaire utilisé dans l'invention pendant la phase de convergence.

Dans le cas où la forme particulière des équations inertielles permet de Rao-Blackwelliser le filtre particulaire, l'état du système peut alors être décomposé en :

- des composantes dites non linéaires désignées $X^{NL}$, à savoir l'erreur inertielle en position et en attitude, qui apparaissent de manière non linéaire dans les équations d'observation,
- des composantes dites linéaires désignées $X^L$, à savoir l'erreur inertielle en vitesse et les biais, qui apparaissent de manière linéaire dans les équations d'état.

Du point de vue mathématique, le cadre général du problème de filtrage est explicité ci-après.

Le système d'évolution d'état peut être formulé suivant la relation suivante :

$$\begin{cases} X_k^L = F_k^{L,L} X_{k-1}^L + F_k^{L,N} X_{k-1}^N + W_k^L \\ X_k^N = F_k^{N,L} X_{k-1}^L + F_k^{N,N} X_{k-1}^N + W_k^N \end{cases} \tag{23},$$

où :

$W_k$ désigne le bruit de process, décomposé en composantes linéaires et non linéaires, considéré comme issu d'une

$$Q_k : \quad W_k = \begin{pmatrix} W_k^L \\ W_k^N \end{pmatrix} \sim N(0, Q_k),$$

distribution normale de moyenne nulle et de matrice de covariance                     la matrice de

$$Q_k = \begin{pmatrix} Q_k^L & Q_k^{L,N} \\ Q_k^{N,L} & Q_k^N \end{pmatrix}$$

covariance s'écrivant

Le vecteur d'observation peut se formuler suivant la relation suivante, ou "équation de mesure" :

$$Y_k = h_k^N \left( X_k^N \right) + h_k^L X_k^L + V_k \tag{24},$$

où :

$V_k$ désigne le bruit d'observation, issu d'une distribution de type bruit blanc Gaussien, de moyenne nulle et de covariance

$$R_k : \quad V_k \sim N(0, R_k).$$

L'estimation de la densité de probabilité a posteriori de l'état $p(X_k^L, X_k^{NL} / Y_k)$ peut alors, en utilisant le théorème de Bayes, être formulée suivant la relation suivante :

$$p(X_k^L, X_k^{NL} / Y_k) = \underbrace{p(X_k^L / X_k^{NL}, Y_k)}_{Kalman} \cdot \underbrace{p(X_k^{NL} / Y_k)}_{Particulaire} \tag{25}.$$

La partie non linéaire de l'état dynamique du système est représentée à l'instant k par les particules $\xi_k^i$, i=1,...,N, associées aux poids $\omega_k^i$ et aux prédicteurs de Kalman $m_k^i$ pour la partie linéaire.

L'initialisation peut être réalisée à partir de la matrice de covariance initiale de l'état, en disposant les particules sur une grille régulière recouvrant l'incertitude à plus ou moins trois sigmas et à zéro pour la partie linéaire.

La marginalisation peut alors se dérouler de la façon suivante, décomposée en différents items, pour chaque valeur de i de 1 à N :

• Simulation de deux vecteurs aléatoires gaussiens indépendants $U^i$ et $W^i$, centrés et de matrice de covariance $P_k^{L/N}$ et $Q_k$ ; et on pose :

$$\xi_k^i = F_k^N \left( m_{k-1}^i + U^i \right) + f_k^N \left( \xi_{k-1}^N \right) + W^i \tag{26},$$

de sorte que le vecteur aléatoire $\xi_k^i$ est gaussien, de vecteur moyenne $F_k^N \cdot m_{k-1}^i + f_k^N\left(\xi_{k-1}^i\right)$ et de matrice de covariance $F_k^N \cdot P_{k-1}^{L/N} \cdot \left(F_k^N\right)^* + Q_k^N$.

- Définition du vecteur moyenne suivant la relation :

$$m_{k|k-1}^i = F_k^L m_{k-1}^i + f_k^L\left(\xi_{k-1}^i\right) + K_{k|k-1}^{L|N}\left(\xi_k^i - F_k^N m_{k-1}^i - f_k^N\left(\xi_{k-1}^i\right)\right) \quad (27),$$

et de la matrice de covariance :

$$P_{k|k-1}^{L|N} = \left(F_k^L P_{k-1}^{L|N}\left(F_k^L\right)^* + Q_k^L\right) - K_{k|k-1}^{L|N}\left(F_k^N P_{k-1}^{L|N}\left(F_k^L\right)^* + Q_k^{N,L}\right) \quad (28),$$

où la matrice de gain $K_{k|k-1}^{L|N}$ est définie par la relation suivante :

$$K_{k|k-1}^{L|N} = \left(F_k^L P_{k-1}^{L|N}\left(F_k^N\right)^* + Q_k^{L,N}\right)\left(F_k^N P_{k-1}^{L|N}\left(F_k^N\right)^* + Q_k^N\right)^{-1} \quad (29).$$

- Définition du poids, formulé par la relation suivante :

$$\omega_k^i \propto q\left(y_k - h_k\left(\xi_k^i\right) - H_k m_{k|k-1}^i, H_k P_{k|k-1}^{L|N} H_k^* + R_k\right)\omega_{k-1}^i \quad (30).$$

- Normalisation du poids.
- Si la taille effective de l'échantillon devient inférieure à un seuil prédéterminé, les particules sont redistribuées selon un échantillonnage multinomial.
- Définition du vecteur moyenne formulé suivant la relation suivante :

$$m_k^i = m_{k|k-1}^i + K_k^{L|N}\left(y_k - h_k\left(\xi_k^i\right) - H_k m_{k|k-1}^i\right) \quad (31),$$

et de la matrice de covariance suivant la relation :

$$P_k^{L|N} = P_{k|k-1}^{L|N} - K_k^{L|N} H_k P_{k|k-1}^{L|N} \quad (32),$$

où la matrice de gain est définie par la relation :

$$K_k^{L|N} = P_{k|k-1}^{L|N} H_k^* \left(H_k P_{k|k-1}^{L|N} H_k^* + R_k\right)^{-1} \quad (33).$$

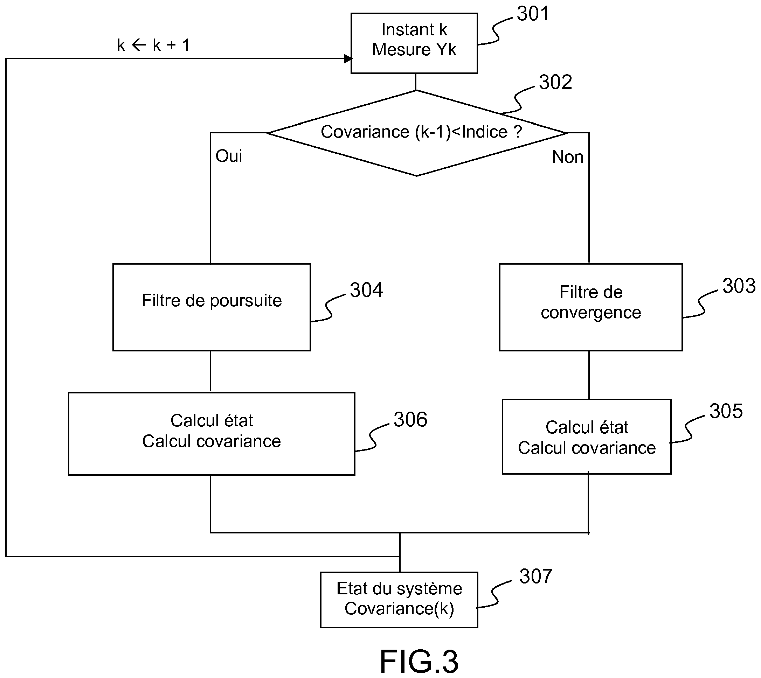

Dans le but de rendre le filtre plus robuste, une étape de post-régularisation peut avantageusement être réalisée après l'étape de correction particulaire par un noyau gaussien de paramètre $\mu$ de régularisation, par exemple fixé à 0,2.
Le filtre de navigation 11 proposé permet de tirer profit du meilleur des deux filtres de convergence et de poursuite, de type particulaire et de Kalman 21, 22, selon le schéma présenté dans la figure 3 décrit ci-après.
A un instant k du temps discrétisé, le filtre de navigation 11 reçoit une mesure, c'est-à-dire une observation de l'état dynamique du système $Y_k$, ainsi que cela est illustré par une première étape 301 sur la figure.

La première étape 301 est suivie d'une étape de comparaison 302, lors de laquelle la valeur d'un indice de qualité calculé à partir de la matrice de covariance restituée par le filtre de navigation à l'instant discrétisé précédent k-1, est comparée à une valeur seuil prédéterminée. L'indice de qualité et la valeur seuil sont précisés en détails ci-après.

A l'issue de l'étape de comparaison 302, des moyens de basculement compris dans le filtre de navigation 11, permettent de forcer l'un ou l'autre des deux filtres de convergence et de poursuite 21, 22 à réaliser les calculs de l'état dynamique du système et de la matrice de covariance associée, pour l'instant k, ainsi que cela est illustré sur la figure par les étapes intermédiaires 303 à 306. Le filtre de navigation 11 restitue alors pour l'instant k, une estimation de l'état du système dynamique et la matrice de covariance associée ainsi que cela est représenté par la dernière étape 307 sur la figure, tels que restitués par le filtre 21, 22 sélectionné. Par exemple, si le filtre de navigation 11 restituait à l'instant k-1 les données calculées par le filtre de poursuite 22, et qu'à l'étape de comparaison 302, l'indice de qualité est inférieur à la valeur seuil prédéterminée, alors pour l'instant k, les moyens de basculement forcent le filtre de poursuite 22 à réaliser les calculs, et le filtre de navigation 11 restitue pour l'instant k l'état du système et la covariance tels que calculés par le filtre de poursuite 22.

Si le filtre de navigation 11 restituait à l'instant k-1 les données calculées par le filtre de poursuite 22, et qu'à l'étape de comparaison 302, l'indice de qualité est supérieur à la valeur seuil prédéterminée, alors pour l'instant k, les moyens de basculement forcent le filtre de convergence 21 à réaliser les calculs, et le filtre de navigation 11 restitue pour l'instant k l'état du système et la covariance tels que calculés par le filtre de convergence 21.

Ainsi, pour ce dernier exemple, si à l'instant k+1, l'indice de qualité reste supérieur à la valeur seuil prédéterminée, alors pour l'instant k+1, les moyens de basculement forcent le filtre de convergence 21 à réaliser les calculs, et le filtre de navigation 11 restitue également pour l'instant k+1 l'état du système et la covariance tels que calculés par le filtre de convergence 21.

Si en revanche l'indice de qualité devient inférieur à la valeur seuil prédéterminée, alors pour l'instant k+1, les moyens de basculement forcent le filtre de poursuite 22 à réaliser les calculs, et le filtre de navigation 11 restitue pour l'instant k+1 l'état du système et la covariance tels que calculés par le filtre de poursuite 22.

L'indice de qualité peut par exemple être la norme des termes d'une sous-matrice de covariance. Par exemple, l'indice de qualité peut être défini comme une norme des termes de la matrice de covariance relatifs à la position du porteur projetée dans un plan horizontal (c'est-à-dire sur les termes en x et y). Plus précisément, la norme peut être définie comme la somme des carrés des termes diagonaux de la sous-matrice de covariance comprenant les termes de position dans un plan horizontal.

Ainsi, par exemple, si la trajectoire du porteur passe sur une longue zone de terrain plat, le filtre de convergence 21, de type particulaire, peut prendre le relais du filtre de poursuite 22, de type filtre de Kalman, afin de permettre une reconvergence dès la réapparition d'un signal exploitable pour la NCT.

Par ailleurs, il est avantageusement possible d'adjoindre au filtre de poursuite 22, de type filtre de Kalman, un dispositif de rejet de mesures aberrantes à partir de l'analyse de l'innovation du filtre. L'innovation du filtre est définie comme l'écart entre la mesure obtenue et la mesure prédite (mesure effectuée en l'état prédit). Par exemple, si l'innovation dépasse une deuxième valeur seuil prédéterminée par rapport à l'écart type de la mesure prévue, c'est-à-dire l'écart type du bruit de mesure $V_k$ la mesure peut être rejetée. Ce mode de réalisation permet de traiter les cas où l'erreur de carte ponctuelle est très grande et ne satisfait pas au modèle prévu pour la zone.

Avantageusement encore, dans le but de permettre la détection de la divergence du filtre de poursuite 22, de type filtre de Kalman, une variable de type compteur peut être introduite, cette variable représentant le nombre de mesures consécutives qui ont été rejetées par le filtre de navigation 11. Lorsque ce nombre dépasse une troisième valeur de seuil prédéterminée, le filtre de navigation 11 suppose que le filtre de poursuite 22, de type filtre de Kalman, est « perdu », et peut automatiquement basculer en mode de filtrage particulaire via le filtre de convergence 21, en augmentant d'un certain facteur (supérieur à 1), par exemple un facteur trois, les incertitudes sur la position, afin de tenter de retrouver la position du porteur.

Avantageusement encore, afin d'éviter au filtre de navigation 11 de confondre un véritable signal avec de l'erreur, par exemple dans le cas d'un terrain très plat, et ainsi de rendre le filtrage plus robuste, une quatrième valeur de seuil minimal peut être introduite sur l'écart type local des mesures impliquées dans la NCT. Si cet écart type est inférieur à la quatrième valeur de seuil, le filtre de navigation 11 peut alors utiliser uniquement les mesures de capteurs de bas niveau, dans le cas contraire il peut utiliser l'ensemble de la mesure pour réaliser la NCT.

## Revendications

1. Filtre de navigation (11) pour système de navigation par corrélation de terrain délivrant une estimation de l'état cinématique d'un porteur associé à une matrice de covariance à un instant discrétisé k à partir d'une pluralité de données comprenant les mesures restituées par au moins un capteur de terrain (102), le modèle associé au capteur de terrain (102), les données d'une carte embarquée (12), un modèle d'erreur de la carte embarquée (12), les mesures restituées par une centrale inertielle (101) et un modèle de la centrale inertielle (101), le filtre de navigation (11) comprenant un premier filtre dit filtre de convergence (21), et un second filtre dit filtre de poursuite (22), le filtre de navigation (11) comprenant des moyens de basculement sélectionnant pour le calcul de l'état cinématique du porteur et de la matrice de covariance, l'un ou l'autre desdits filtres de convergence (21) et filtre de poursuite (22), en fonction de la comparaison (302) d'un indice de qualité calculé à partir de la matrice de covariance restituée par le filtre de navigation (11) à l'instant précédent k-1, à une valeur seuil prédéterminée, le filtre de navigation (11) restituant les valeurs calculées par le filtre (21, 22) sélectionné **caractérisé en ce que** le filtre de convergence (21) est un filtre particulaire.

2. Filtre de navigation (11) selon la revendication 1, **caractérisé en ce que** l'indice de qualité est égal à une norme des termes d'une sous-matrice de la matrice de covariance.

3. Filtre de navigation (11) selon la revendication 1, **caractérisé en ce que** l'indice de qualité est égal à une norme des termes de la sous-matrice de covariance comprenant les termes de position (x,y) du porteur dans un plan horizontal.

4. Filtre de navigation (11) selon la revendication 1, **caractérisé en ce que** l'indice de qualité est égal à la somme des carrés des termes diagonaux de la sous-matrice de covariance comprenant les termes de position (x,y) du porteur dans un plan horizontal.

5. Filtre de navigation (11) selon l'une quelconque des revendications précédentes, **caractérisé en ce que** le filtre de convergence (21) est un filtre de type particulaire marginalisé.

6. Filtre de navigation (11) selon l'une quelconque des revendications précédentes, **caractérisé en ce que** le filtre de poursuite (22) est un filtre de type filtre de Kalman étendu EKF.

7. Filtre de navigation (11) selon l'une quelconque des revendications précédentes, **caractérisé en ce que** le filtre de poursuite (22) est un filtre de type UKF.

8. Filtre de navigation (11) selon l'une quelconque des revendications précédentes, **caractérisé en ce que** le filtre de poursuite (22) est associé à un dispositif de rejet de mesures aberrantes du filtre de navigation (11), rejetant les mesures si le rapport entre l'innovation et l'écart type du bruit de mesure dépasse une deuxième valeur de seuil prédéterminée.

9. Filtre de navigation (11) selon la revendication 8, **caractérisé en ce que** les moyens de basculement restituent en sortie du filtre de navigation (11) les données restituées par ledit filtre de convergence (21) lorsque le nombre de mesures consécutives rejetées par le dispositif de rejet est supérieur à une troisième valeur de seuil prédéterminée.

10. Filtre de navigation (11) selon l'une quelconque des revendications précédentes, **caractérisé en ce qu'**il comprend en outre des moyens de comparaison de l'écart type local des mesures de navigation par corrélation de terrain à une quatrième valeur de seuil prédéterminée, le filtre de navigation (11) se basant uniquement sur les mesures fournies par le baro-altimètre (1013) compris dans la centrale inertielle (101) lorsque l'écart type est inférieur à ladite troisième valeur de seuil prédéterminée.

**Patentansprüche**

1. Navigationsfilter (11) für Navigationssystem mit Hilfe von Geländekorrelation, welcher eine Schätzung des kinematischen Zustandes eines Trägers abgibt, welcher mit einer Kovarianz-Matrix zu einem diskretisierten Zeitpunkt k verbunden ist, anhand einer Vielzahl von Daten, beinhaltend die Messungen, die durch mindestens einen Geländesensor (102) wiedergegeben werden, das mit dem Geländesensor (102) verbundene Modell, die Daten einer Bordkarte (12), ein Fehlermodell der Bordkarte (12), die durch eine inertiale Messeinheit (101) wiedergegebenen Messungen und ein Modell der inertialen Messeinheit (101), wobei der Navigationsfilter (11) einen ersten Filter beinhaltet, genannt Konvergenzfilter (21), und einen zweiten Filter, genannt Verfolgungsfilter (22), wobei der Navigationsfilter (11) Mittel zum Umschalten beinhaltet, welche, für die Berechnung des kinematischen Zustandes des Trägers und der Kovarianz-Matrix, den einen oder den anderen des Konvergenzfilters (21) und des Verfolgungsfilters (22) wählen, angesichts des Vergleichs (302) eines Qualitätsindizes, welcher anhand der durch den Navigationsfilter (11) wiedergegebenen Kovarianz-Matrix zum vorhergehenden Zeitpunkt k-1 berechnet wird, mit einem vorbestimmten Schwellenwert, wobei der Navigationsfilter (11) die durch den gewählten Filter (21, 22) berechneten Werte wiedergibt, **dadurch gekennzeichnet, dass** der Konvergenzfilter (21) ein Partikel-Filter ist.

2. Navigationsfilter (11) nach Anspruch 1, **dadurch gekennzeichnet, dass** der Qualitätsindex gleich einer Norm der Terme einer Untermatrix der Kovarianz-Matrix ist.

3. Navigationsfilter (11) nach Anspruch 1, **dadurch gekennzeichnet, dass** der Qualitätsindex gleich einer Norm der Terme der Kovarianz-Untermatrix ist, welche die Positionsterme (x,y) des Trägers in einer horizontalen Ebene beinhaltet.

4. Navigationsfilter (11) nach Anspruch 1, **dadurch gekennzeichnet, dass** der Qualitätsindex gleich der Summe der Quadrate der Diagonalterme der Kovarianz-Untermatrix ist, welche die Positionsterme (x,y) des Trägers in einer horizontalen Ebene beinhaltet.

5. Navigationsfilter (11) nach einem der vorhergehenden Ansprüche, **dadurch gekennzeichnet, dass** der Konvergenzfilter (21) ein Filter vom Typ marginalisierter Partikel-Filter ist.

6. Navigationsfilter (11) nach einem der vorhergehenden Ansprüche, **dadurch gekennzeichnet, dass** der Verfolgungsfilter (22) ein Filter vom Typ erweiterter Kalman-Filter EKF ist.

7. Navigationsfilter (11) nach einem der vorhergehenden Ansprüche, **dadurch gekennzeichnet, dass** der Verfolgungsfilter (22) ein Filter vom Typ UKF ist.

8. Navigationsfilter (11) nach einem der vorhergehenden Ansprüche, **dadurch gekennzeichnet, dass** der Verfolgungsfilter (22) mit einer Vorrichtung zur Unterdrückung von aberranten Messungen des Navigationsfilters (11) verbunden ist, welche Messungen unterdrückt, wenn das Verhältnis zwischen der Innovation und der Standardabweichung des Messrauschens einen zweiten vorherbestimmten Schwellenwert überschreitet.

9. Navigationsfilter (11) nach Anspruch 8, **dadurch gekennzeichnet, dass** die Umschaltmittel am Ausgang des Navigationsfilters (11) die von dem Konvergenzfilter (21) wiedergegebenen Daten wiedergeben, wenn die Anzahl der nacheinander durch die Unterdrückungsvorrichtung unterdrückten Messungen einen dritten vorbestimmten Schwellenwert überschreitet.

10. Navigationsfilter (11) nach einem der vorhergehenden Ansprüche, **dadurch gekennzeichnet, dass** er zudem Mittel zum Vergleichen der lokalen Standardabweichung der Navigationsmessungen mit Hilfe von Geländekorrelation mit einem vierten vorbestimmten Schwellenwert beinhaltet, wobei der Navigationsfilter (11) ausschließlich auf Messwerten basiert, welche durch den barometrischen Höhenmesser (1013) geliefert werden, welcher in der inertialen Messeinheit (101) beinhaltet ist, wenn die Standardabweichung den dritten vorbestimmten Schwellenwert unterschreitet.

**Claims**

1. A navigation filter (11) for a terrain correlation aided navigation system delivering an estimation of the kinematic state of a carrier associated with a covariance matrix at a discretized moment in time k by means of a plurality of data comprising the measurements returned by at least one terrain sensor (102), the model associated with the terrain sensor (102), the data from an onboard map (12), an error model for the onboard map (12), the measurements returned by an inertial unit (101) and a model of the inertial unit (101), the navigation filter (11) comprising a first filter referred to as convergence filter (21), and a second filter referred to as tracking filter (22), the navigation filter (11) comprising switch-over means selecting, for the calculation of the kinematic state of the carrier and of the covariance matrix, one or other of said convergence filters (21) and tracking filter (22), depending on the comparison (302) of a quality index calculated from the covariance matrix returned by the navigation filter (11) at the preceding moment in time k-1, with a predetermined threshold value, the navigation filter (11) returning the values calculated by the selected filter (21, 22), **characterized in that** the convergence filter (21) is a particle filter.

2. The navigation filter (11) according to Claim 1, **characterized in that** the quality index is equal to a norm of the terms of a sub-matrix of the covariance matrix.

3. The navigation filter (11) according to Claim 1, **characterized in that** the quality index is equal to a norm of the terms of the sub-covariance matrix comprising the position terms (x,y) of the carrier in a horizontal plane.

4. The navigation filter (11) according to Claim 1, **characterized in that** the quality index is equal to the sum of the squares of the diagonal terms of the sub-covariance matrix comprising the position terms (x,y) of the carrier in a horizontal plane.

5. The navigation filter (11) according to any one of the preceding claims, **characterized in that** the convergence filter (21) is a filter of the marginalised particulate filter type.

6. The navigation filter (11) according to any one of the preceding claims, **characterized in that** the tracking filter (22) is a filter of the extended Kalman filter EKF type.

7. The navigation filter (11) according to any one of the preceding claims, **characterized in that** the tracking filter (22) is a filter of the UKF type.

8. The navigation filter (11) according to any one of the preceding claims, **characterized in that** the tracking filter (22) is associated with a device for rejection of outlier measurements from the navigation filter (11), rejecting the measurements if the ratio between the innovation and the standard deviation of the measurement noise exceeds a second predetermined threshold value.

9. The navigation filter (11) according to Claim 8, **characterized in that** the switch-over means deliver at the output of the navigation filter (11) the data returned by said convergence filter (21) when the number of consecutive measurements rejected by the rejection device is greater than a third predetermined threshold value.

10. The navigation filter (11) according to any one of the preceding claims, **characterized in that** it furthermore comprises means for comparing the local standard deviation of the measurements for navigation by terrain correlation with a fourth predetermined threshold value, the navigation filter (11) being based only on the measurements supplied by the baro-altimeter (1013) comprised within the inertial unit (101) when the standard deviation is less than said third predetermined threshold value.

FIG.1

FIG.2

FIG.3